(19) **Europäisches Patentamt / European Patent Office / Office européen des brevets**

(11) **EP 2 341 588 A1**

(12) **EUROPEAN PATENT APPLICATION**
published in accordance with Art. 153(4) EPC

(43) Date of publication:
06.07.2011 Bulletin 2011/27

(21) Application number: 09819074.7

(22) Date of filing: 14.09.2009

(51) Int Cl.:
*H01S 3/10* (2006.01)     *G02B 5/04* (2006.01)
*G02B 5/18* (2006.01)

(86) International application number:
**PCT/JP2009/066041**

(87) International publication number:
**WO 2010/041539 (15.04.2010 Gazette 2010/15)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: 08.10.2008 JP 2008262104

(71) Applicant: **Hamamatsu Photonics K.K.**
**Hamamatsu-shi**
**Shizuoka 435-8558 (JP)**

(72) Inventors:
• **YAMAMOTO Koei**
  **Hamamatsu-shi**
  **Shizuoka 435-8558 (JP)**
• **KAWADA Yoichi**
  **Hamamatsu-shi**
  **Shizuoka 435-8558 (JP)**
• **OISHI Shingo**
  **Hamamatsu-shi**
  **Shizuoka 435-8558 (JP)**
• **MORIGUCHI Toshiharu**
  **Hamamatsu-shi**
  **Shizuoka 435-8558 (JP)**

• **SAKAMOTO Shigeru**
  **Hamamatsu-shi**
  **Shizuoka 435-8558 (JP)**
• **ITO Haruyasu**
  **Hamamatsu-shi**
  **Shizuoka 435-8558 (JP)**
• **FUJIMOTO Masatoshi**
  **Hamamatsu-shi**
  **Shizuoka 435-8558 (JP)**
• **TAKAHASHI Hironori**
  **Hamamatsu-shi**
  **Shizuoka 435-8558 (JP)**
• **FUKUMITSU Kenshi**
  **Hamamatsu-shi**
  **Shizuoka 435-8558 (JP)**
• **SHIBAYAMA Katsumi**
  **Hamamatsu-shi**
  **Shizuoka 435-8558 (JP)**
• **AOSHIMA Shinichiro**
  **Hamamatsu-shi**
  **Shizuoka 435-8558 (JP)**

(74) Representative: **Frost, Alex John**
**Boult Wade Tennant**
**Verulam Gardens**
**70 Gray's Inn Road**
**London WC1X 8BT (GB)**

(54) **OPTICAL ELEMENT, LASER BEAM OSCILLATION DEVICE AND LASER BEAM AMPLIFYING DEVICE**

(57)    An optical element 20A which is composed of a light transmission characteristic medium, that has a refractive index higher than a refractive index of air, the optical element causes an incident laser beam to be propagated inside while reflecting the laser beam by a wall surface 20a a plurality of times, the optical element includes an incident window 21 which is located in a part of the wall surface 20a, that is for allowing the laser beam to be incident, an emitting window 22 which is located in a part of the wall surface 20a, that is for allowing the laser beam propagated inside to be emit, and wavelength dispersion compensating units 31 and 32 which are integrally located in parts of the medium, the wavelength dispersion compensating units compensate for wavelength dispersion by causing the laser beam to be transmitted or reflected at least twice.

EP 2 341 588 A1

# *Fig.3*

# Description

## Technical Field

The present invention relates to an optical element capable of compensating for wavelength dispersion of a laser beam, and a laser beam oscillation device and a laser beam amplifying device using the optical element.

## Background Art

For a laser beam oscillation device and a laser beam amplifying device, various light transmission characteristic optical elements such as a condensing lens and a laser beam amplifying medium for amplifying a laser beam are used, and wavelength dispersion of a laser beam due to these optical elements is problematic. Regarding this problem, the inventions for compensating for wavelength dispersion of a laser beam are disclosed in the following Patent Literatures 1 and 2.

A dispersion correction device described in Patent Literature 1 is provided with a pair of prisms disposed on its optical path, that compensates for wavelength dispersion of a laser beam by these prisms. Further, a laser beam oscillation device described in Patent Literature 2 is provided with a pair of diffraction grating elements disposed on its optical path, that compensates for group velocity dispersion (GVD), i.e., wavelength dispersion of a laser beam by these diffraction grating elements.

## Citation List

## Patent Literature

Patent Literature 1: Japanese Published Unexamined Patent Application No. Hei-8-264869
Patent Literature 2: Japanese Published Unexamined Patent Application No. 2000-216463

## Summary of Invention

## Problem to be Solved by Invention

However, in the case where a pair of prisms or a pair of diffraction grating elements are provided as the inventions described in Patent Literatures 1 and 2, because an angle of incidence of an incident light into these prisms and diffraction grating elements, and spacing of the pair of prisms or the pair of diffraction grating elements are important parameters, there has been a problem that the alignment at the time of forming its optical system is extremely troublesome.

Therefore, it is an object of the present invention to provide an optical element, a laser beam oscillation device and a laser beam amplifying device which are capable of compensating for wavelength dispersion of a laser beam more simply than the conventional art.

## Means for Solving the Problem

An optical element of the present invention, which is composed of a light transmission characteristic medium, that has a refractive index higher than a refractive index of air, the optical element causes an incident laser beam to be propagated inside while reflecting the laser beam by a wall surface a plurality of times, the optical element includes an incident window which is located in a part of the wall surface, that is for allowing the laser beam to be incident, an emitting window which is located in a part of the wall surface, that is for allowing the laser beam propagated inside to be emit, and a wavelength dispersion compensating unit which is integrally located in a part of the medium, the wavelength dispersion compensating unit compensates for wavelength dispersion by causing the laser beam to be transmitted or reflected at least twice.

According to the optical element, because the wavelength dispersion compensating unit for compensating for wavelength dispersion of a laser beam is integrally located in the part of the medium composing the optical element, the position adjustment for the wavelength dispersion compensating unit is easy. Therefore, according to the optical element, it is possible to compensate for wavelength dispersion of a laser beam more simply than the conventional art.

Further, according to the optical element, because the refractive index of the medium composing the optical element is higher than the refractive index of air, it is possible to lengthen the distance for which a laser beam is propagated inside the optical element, which makes it possible to lengthen the optical path length (lengthening of the optical path length). Further, because the laser beam is propagated inside the optical element while reflecting the laser beam by the wall surface a plurality of times, it is possible to obtain a longer optical path length. Accordingly, in a case of realizing an optical device such as a laser beam oscillation device or a laser beam amplifying device, it is possible to achieve downsizing of the optical device as compared to the case of using the configuration in which a laser beam is propagated for the same distance in the air.

The above-described wavelength dispersion compensating unit may be formed on the part of the medium by a direct process, or attached on the part of the medium.

According to this invention, a positional accuracy and a spacing accuracy of the wavelength dispersion compensating unit depend on an accuracy of forming the medium composing the optical element. Because it is possible to extremely accurately form the medium composing the optical element, it is possible to easily improve the positional accuracy and the spacing accuracy of the wavelength dispersion compensating unit. Accordingly, it is possible to compensate for wavelength dispersion of a laser beam more simply than the conventional art.

Further, the above-described wavelength dispersion compensating unit may be located at at least one of the incident window and the emitting window, and may be a transmissive wavelength dispersion compensating unit, or may be located on the wall surface other than the incident window and the emitting window, and may be a reflective wavelength dispersion compensating unit. Further, the above-described wavelength dispersion compensating unit may be located inside the medium.

In the case where the wavelength dispersion compensating units are provided on the wall surface other than the incident window and the emitting window, and inside the medium, it is possible to adjust the optical path length between the wavelength dispersion compensating units and the optical path length of propagating inside the medium according to positions of the wavelength dispersion compensating units. Because the amount of wavelength dispersion compensation by the wavelength dispersion compensating units depends on the optical path length between the wavelength dispersion compensating units, it is possible to arbitrarily control wavelength dispersion according to positions of the wavelength dispersion compensating units.

Further, it is necessary to adjust an optical path length between optical resonators in order to perform mode-locking of an ultrashort pulsed laser beam. Thereby, it is possible to easily perform mode-locking of an ultrashort pulsed laser beam according to positions of the wavelength dispersion compensating units, and it is also possible to arbitrarily control wavelength dispersion for an arbitrary optical path length.

Further, the above-described wavelength dispersion compensating unit may be a diffraction grating, or a prism.

Further, the above-described incident window and emitting window are located in a same portion in the wall surface. According to this invention, because it is possible to double the optical path length even with use of a medium having the same area and volume as the optical element, in a case of realizing an optical device such as a laser beam oscillation device or a laser beam amplifying device, it is possible to achieve further downsizing of the optical device.

A laser beam oscillation device of the present invention includes an energy supplying unit which supplies an excitation light, an optical amplifying medium which receives the excitation light to generate a laser beam, and an optical element which causes the laser beam to be propagated inside while reflecting the laser beam by a wall surface a plurality of times, that is the optical element described above.

According to the laser beam oscillation device, because the laser beam oscillation device includes the optical element integrally including the wavelength dispersion compensating unit as described above, the position adjustment required for compensating for wavelength dispersion of a laser beam is easy. Therefore, according to the laser beam oscillation device, it is possible to compensate for wavelength dispersion of a laser beam more simply than the conventional art.

Further, according to the laser beam oscillation device, because the laser beam oscillation device includes the optical element capable of lengthening the optical path length as described above, it is possible to achieve downsizing thereof as compared to the case of using the configuration in which a laser beam is propagated for the same distance in the air.

A laser beam amplifying device of the present invention includes an energy supplying unit which supplies an excitation light, an optical amplifying medium which receives a seed light, and amplifies the seed light by using the excitation light, to generate a laser beam, and an optical element which causes the laser beam to be propagated inside while reflecting the laser beam by a wall surface a plurality of times, that is the optical element described above.

According to the laser beam amplifying device, because the laser beam amplifying device includes the optical element integrally including the wavelength dispersion compensating unit as described above, the position adjustment required for compensating for wavelength dispersion of a laser beam is easy. Therefore, according to the laser beam amplifying device, it is possible to compensate for wavelength dispersion of a laser beam more simply than the conventional art.

Further, according to the laser beam amplifying device, because the laser beam amplifying device includes the optical element capable of lengthening the optical path length as described above, it is possible to achieve downsizing thereof as compared to the case of using the configuration in which a laser beam is propagated for the same distance in the air.

**Advantage of Invention**

According to the present invention, it is possible to compensate for wavelength dispersion of a laser beam more simply than the conventional art.

**Brief Description of Drawings**

FIG. 1 is a block diagram of a laser beam oscillation device according to one embodiment of the present invention.

FIG 2 is a block diagram of a laser beam amplifying device according to one embodiment of the present invention.

FIG. 3 is a block diagram of an optical element according to a first embodiment of the present invention.

FIG. 4 is a block diagram of an optical element according to a second embodiment of the present invention.

FIG. 5 is a block diagram of an optical element according to a third embodiment of the present invention.

FIG 6 is a block diagram of an optical element according to a fourth embodiment of the present invention.

FIG 7 is a block diagram of an optical element according to a fifth embodiment of the present invention.

FIG. 8 is a block diagram of an optical element according to a sixth embodiment of the present invention.

FIG. 9 is a block diagram of an optical element according to a seventh embodiment of the present invention.

FIG 10 is a block diagram of an optical element according to an eighth embodiment of the present invention.

**Description of Reference Symbols**

100 ... laser beam oscillation device, 100A ... laser beam amplifying device, 200 ... seed light generating device, 110 ... energy supplying unit, 120 ... optical amplifying unit, 10 ... optical amplifying medium, 20, 20A to 20H ... optical elements, 20a ... wall surface, 21 ... incident window, 22 ... emitting window, 31, 32, 33, 34, 35, 36, 37 ... diffraction gratings (wavelength dispersion compensating units), 38 ... total reflecting plate, 39, 40 ... prisms

**Description of Embodiments of Carrying out the Invention**

Hereinafter, preferred embodiments of the present invention will be described in detail with reference to the drawings. In addition, portions which are the same or correspond to those in the respective drawings are denoted by the same reference numerals.

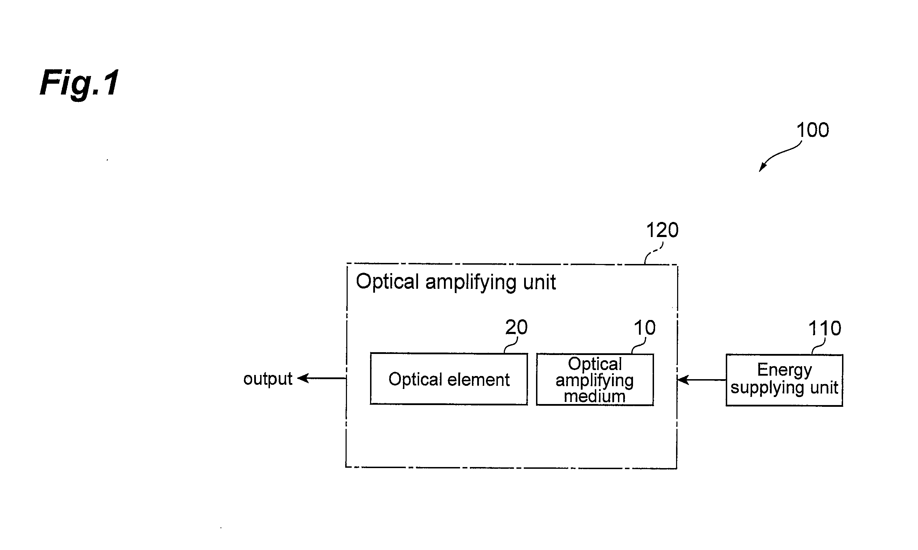

FIG 1 is a block diagram of a laser beam oscillation device 100 according to an embodiment of the present invention. The laser beam oscillation device 100 shown in FIG 1 is provided with an energy supplying unit 110 and an optical amplifying unit 120. The energy supplying unit 110 supplies excitation energy (for example, an excitation light) to the optical amplifying unit 120. The optical amplifying unit 120 has an optical amplifying medium 10 and an optical element 20. The optical amplifying medium 10 receives the excitation energy from the energy supplying unit 110, to output a laser beam with optical amplification by stimulated emission. The optical element 20 is composed of a light transmission characteristic medium (for example, a transparent medium), that allows a laser beam from the optical amplifying medium 10 to pass through the inside thereof. The optical element 20 allows a laser beam to be propagated inside while reflecting the laser beam by a wall surface a plurality of times.

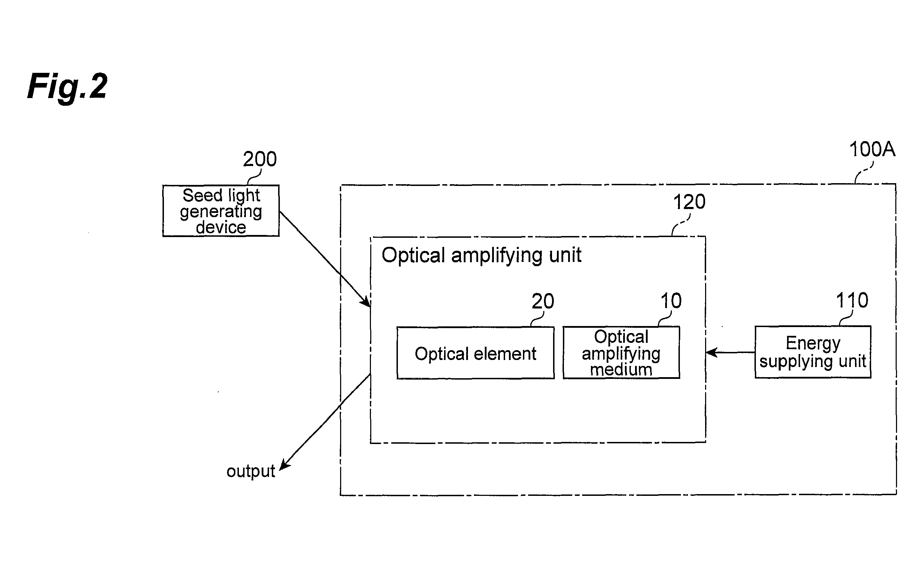

FIG 2 is a block diagram of a laser beam amplifying device 100A according to an embodiment of the present invention. In FIG. 2, a seed light generating device 200 is shown along with the laser beam amplifying device 100A of the present embodiment. In the same way as the laser beam oscillation device 100, the laser beam amplifying device 100A shown in FIG 2 is provided with the energy supplying unit 110 and the optical amplifying unit 120. The energy supplying unit 110 supplies excitation energy (for example, an excitation light) to the optical amplifying unit 120. The optical amplifying unit 120 has the optical amplifying medium 10 and the optical element 20. The optical amplifying medium 10 uses the excitation energy from the energy supplying unit 110, to amplify a seed light from the external seed light generating device 200, and outputs a laser beam. The optical element 20 is composed of a light transmission characteristic medium (for example, a transparent medium), and allows a laser beam from the optical amplifying medium 10 to pass through the inside thereof. The optical element 20 allows a laser beam to be propagated inside while reflecting the laser beam by a wall surface a plurality of times.
In addition, these laser beam oscillation device 100 and laser beam amplifying device 100A may have a multipath structure in which an optical resonator (for example, a Fabry-Perot type optical resonator) is provided and a laser beam passes through the optical amplifying medium 10 and the optical element 20 a plurality of times.
Here, as the energy supplying unit 110, a semiconductor laser beam source may be used. Provided that a semiconductor laser beam source having an oscillation wavelength matched to the absorption spectrum of the optical amplifying medium 10 is used as the energy supplying unit 110, it is possible to improve the excitation efficiency of the optical amplifying medium 10.
Further, as the optical amplifying medium 10, a solid laser medium may be used. For example, titanium-sapphire, Nd:YAG, Yb:KGW, Yb:KYW, Yb:YAG, or the like may be used. In the case where the optical amplifying medium 10 is a solid laser medium, for example, the absorption wavelength of a Yb-series laser medium is excellent in matching with the oscillation wavelength of a commercially available semiconductor laser beam source.
Next, as one embodiment of the optical element 20, optical elements 20A to 20H as the first to eighth embodiments will be exemplified.

[First Embodiment]

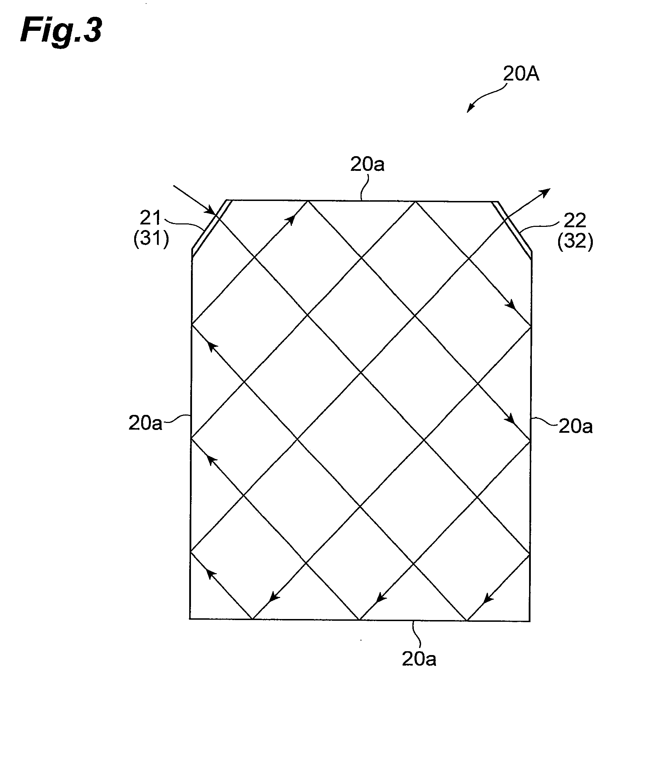

FIG 3 is a block diagram of the optical element 20A according to the first embodiment of the present invention. The optical element 20A shown in FIG. 3 is a substantially rectangular parallelepiped shape, and an incident window 21 and an emitting window 22 are formed in parts of a wall surface 20a. In the present embodiment, one corner portion of the optical element 20A is chamfered to form the incident window 21, and another one corner portion thereof is chamfered to form the emitting window 22.

Transmissive diffraction gratings 31 and 32 are respectively formed on these incident window 21 and emitting window 22 by a direct process. In this way, the diffraction grating 31 is integrally formed with the incident window 21 and the diffraction grating 32 is integrally formed with the emitting window 22.

As the optical element 20A, a solid medium of, for example, synthetic quartz or the like may be used. Synthetic quartz has high transparency in a broad wavelength band from the ultraviolet band to the infrared band, and is further excellent in thermal stability because of its low coefficient of thermal expansion. In addition, the optical element 20A may be another glass material such as borosilicate glass or soda-lime glass, a plastic material such as acrylic or polypropylene, or a single crystal material such as sapphire or diamond.

In addition, the diffraction gratings 31 and 32 may be formed into plates composed of a medium which is the same as the optical element 20A, and these diffraction grating plates may be integrally attached respectively on the incident window 21 and the emitting window 22.

In the optical element 20A, a laser beam is incident from the incident window 21, and is propagated inside while totally reflecting the laser beam by the wall surface 20a a plurality of times, to be emit from the emitting window 22.

An angle of incidence of the laser beam onto the wall surface 20a is greater than or equal to a critical angle when the laser beam is reflected by the wall surface 20a. For example, in the case where the optical element 20A is composed of synthetic quartz, because its refractive index is approximately 1.453, a critical angle to the air is approximately 43.6 degrees. Accordingly, when a light propagated inside the optical element 20A composed of synthetic quartz travels at 45 degrees to the wall surface 20a, the light is totally reflected by the wall surface (interface between the synthetic quartz and the air) 20a. Therefore, in this case, there is no need to apply a high-reflectivity coating to the reflecting place.

Further, the laser beam passes through the diffraction gratings 31 and 32 formed on the incident window 21 and the emitting window 22 respectively once, that means that the laser beam passes through the diffraction gratings twice in total.

Here, when the laser beam is propagated inside the optical element 20A, for example, the laser beam receives positive wavelength dispersion dependently on the refractive index dispersion provided to the medium, for example. The wavelength dispersion $\phi+$ due to the medium of the optical element 20A is expressed by the following expression (1).

[Expression 1]

$$\phi_+ = -\frac{\lambda^3}{2\pi c^2}\frac{d^2 n}{d\lambda^2}l_m \cdots (1)$$

$\lambda$: wavelength of laser beam
c: velocity of laser beam
$d^2 n/d\lambda^2$: secondary refractive index dispersion specific to the medium of the optical element 20A
$1_m$: propagation distance inside the optical element 20A
In the case where the laser beam is an ultrashort pulsed beam, the wavelength dispersion $\phi_+$ thereof extends the pulse duration of the ultrashort pulsed beam.
Further, when the laser beam passes through the diffraction gratings 31 and 32, the laser beam receives negative wavelength dispersion, for example. The wavelength dispersion $\phi_-$ due to the diffraction gratings 31 and 32 is expressed by the following expression (2).

[Expression 2]

$$\phi_- = -\frac{4\pi^2 C}{\omega^3 d_g{}^2}\frac{n l_g}{\cos^2\theta} \cdots (2)$$

$\omega$: angular frequency of laser beam ($\omega = 2\pi c/\lambda$)
dg: engraved line spacing of the respective diffraction gratings 31 and 32
$\theta$: angle of diffraction of light at the diffraction gratings 31 and 32
n: refractive index specific to the medium of the optical element 20A
1g: distance between the diffraction gratings 31 and 32
In the case where the laser beam is an ultrashort pulsed beam, in the same way, the wavelength dispersion $\phi_-$ thereof extends the pulse duration of the ultrashort pulsed beam.
In the present embodiment, it is necessary for an angle of diffraction of the diffraction grating 31 and an angle of incidence onto the diffraction grating 32 to be equal, that is $\theta$. Further, in the present embodiment, the distance 1g between the diffraction gratings 31 and 32 is equal to the propagation distance $1_m$ inside the optical element 20A.
In this way, because the wavelength dispersion

$\phi_+$ due to the medium of the optical element 20A and the wavelength dispersion $\phi_-$ due to the diffraction gratings 31 and 32 are different in polar character, the wavelength dispersion $\phi_+$ due to the medium of the optical element 20A can be compensated by the wavelength dispersion $\phi_-$ due to the diffraction gratings 31 and 32.

As a compensating method, $\phi_+ + \phi_- = 0$ may be set, and the wavelength dispersion $\phi_+$ due to the medium of the optical element 20A may be completely offset by the wavelength dispersion $\phi_-$ due to the diffraction gratings 31 and 32. $\phi_+ + \phi_- \neq 0$ may be set, the wavelength dispersion of the entire laser beam oscillation device 100 (or the laser beam amplifying device 100A) including not only the wavelength dispersion $\phi_+$ due to the medium of the optical element 20A, but also the wavelength dispersion due to the optical elements such as the optical amplifying medium 10, the condensing lens, and the like in the laser beam oscillation device 100 (or the laser beam amplifying device 100A) may be offset by the wavelength dispersion $\phi_-$ due to the diffraction gratings 31 and 32.

For example, in the case where a laser beam which is an ultrashort pulsed beam is desired to be emit directly as the ultrashort pulsed beam, it is recommended that $\phi_+ + \phi_- = 0$ be set. Given that the wavelength of a laser beam is $\lambda = 0.8~\mu m$, and the material of the optical element 20A is synthetic quartz, the refractive index of the synthetic quartz is n = 1.453, and the secondary refractive index dispersion is 3.988 x $10^{-2}$. In the case where a laser beam is incident in Littrow geometry into the diffractive gratings, in order for the sum of $\phi_+$ and $\phi_-$ to be zero, it is recommended that the number of engraved lines of the diffraction gratings 31 and 32 be set to 165.5 grooves/mm by the above-described expression (1) and expression (2).

According to the optical element 20A of the first embodiment, because the diffraction gratings (wavelength dispersion compensating units) 31 and 32 for compensating for wavelength dispersion of a laser beam are respectively formed integrally with the incident window 21 and the emitting window 22 in the medium composing the optical element 20A, the position adjustment for the diffraction gratings 31 and 32 is easy. Further, it is possible to reduce the displacement of the diffraction gratings 31 and 32 due to external stress such as oscillation. Therefore, according to the optical element 20A of the first embodiment, it is possible to compensate for wavelength dispersion of a laser beam more simply than the conventional art.

Further, a positional accuracy and a spacing accuracy of the diffraction gratings 31 and 32 depend on an accuracy of forming the medium composing the optical element 20A. Because it is possible to extremely accurately form the medium composing the optical element 20A, it is possible to easily improve the positional accuracy and the spacing accuracy of the diffraction gratings 31 and 32.

Further, according to the optical element 20A of the first embodiment, because the refractive index of the medium composing the optical element 20A is higher than the refractive index of air, it is possible to lengthen the distance for which a laser beam is propagated inside the optical element 20A, which makes it possible to lengthen the optical path length (lengthening of the optical path length). Further, because the laser beam is propagated while reflecting the laser beam by the wall surface 20a a plurality of times inside the optical element 20A, it is possible to obtain a longer optical path length. Accordingly, in a case of realizing an optical device such as the laser beam oscillation device 100 or the laser beam amplifying device 100A, it is possible to achieve downsizing of the optical device as compared to the case of using the configuration in which a laser beam is propagated for the same distance in the air.

Further, according to the optical element 20A of the first embodiment, because of $I_m = I_g$ in the above-described expressions (1) and (2), it is possible for the sum of $\phi_+$ and $\phi_-$ to be zero for an arbitrary propagation distance. That is, it is possible to simultaneously achieve lengthening of the optical path length and wavelength dispersion compensation.

In this way, according to the optical element 20A of the first embodiment, because wavelength dispersion compensation is possible for an arbitrary optical path length, it is possible to easily carry out mode-locking in the ultrashort pulsed laser beam while achieving downsizing of the optical device. In mode-locking, Kerr lens mode-locking or passive mode-locking using a semiconductor saturable absorber may be utilized. In a case of using a semiconductor saturable absorber, because it is necessary to condense light on the semiconductor saturable absorber, it is necessary to insert a concave mirror along the way of the optical path to the semiconductor saturable absorber.

[Second Embodiment]

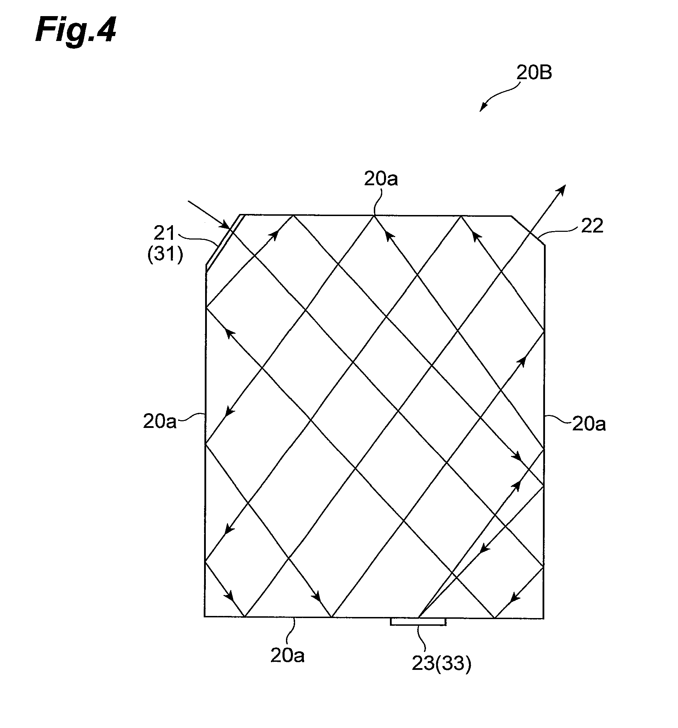

FIG. 4 is a block diagram of an optical element 20B according to the second embodiment of the present invention. The optical element 20B shown in FIG 4 is different from the first embodiment in the configuration in which, in the optical element 20A, a diffraction grating is formed on, in place of the emitting window 22, a part 23 of the wall surface 20a other than the incident window 21 and the emitting window 22. The other configuration of the optical element 20B is the same as that of the optical element 20A.

A diffraction grating plate on which a reflective diffraction grating 33 is formed by a direct process, is integrally attached on the part 23 of the wall surface 20a. As the diffraction grating plate, a material thereof is preferably the same as the medium of the optical element 20A described above.

It is preferable that a metal film is deposited on the reflective diffraction grating 33 to increase its reflectance ratio. At this time, it is preferable to design such that a diffracted light is incident onto the wall surface 20a at an angle by which the total reflection condition is satisfied. Meanwhile, coating by a reflecting film may be applied thereto.

In addition, the diffraction grating 33 may be integrally formed with the part 23 of the wall surface 20a by a direct process.

In the optical element 20B of the second embodiment as well, it is possible to obtain advantages which are the same as those of the optical element 20A of the first embodiment.

In the optical element 20B of the second embodiment, differently from the optical element 20A of the first embodiment, a propagation distance $1_m$ inside the optical element 20B and a distance $l_g$ between the diffraction gratings 31 and 33 are unequalized. This distance between the diffraction gratings 31 and 33, i.e., the optical path length between the diffraction gratings 31 and 33 is variable according to a position of forming the diffraction grating 33. For example, with reference to FIG 4, the laser beam diffracted by the diffraction grating 31 is incident into the diffraction grating 33 after being totally reflected by the wall surface 20a. However, provided that the number of total reflections by the wall surface 20a between the diffraction gratings 31 and 33 is decreased, it is possible to shorten the spacing lg between the diffraction gratings 31 and 33, and provided that the number of total reflections by the wall surface 20a between the diffraction gratings 31 and 33 is increased, it is possible to lengthen the spacing lg between the diffraction gratings 31 and 33

In this way, in the optical element 20B of the second embodiment, it is possible to adjust the distance lg between the diffraction gratings 31 and 33 according to a position of forming the diffraction grating 33. As shown in the above-described expression (2), the amount of the wavelength dispersion $\phi_-$ due to the diffraction gratings 31 and 33 depends on the distance lg between the diffraction gratings 31 and 33. Therefore, according to the optical element 20B of the second embodiment, it is possible to arbitrarily control wavelength dispersion according to a position of forming the diffraction grating 33.

Further, in the optical element 20B of the second embodiment, it is possible to adjust the propagation distance $1_m$ inside the optical element 20B as well according to a position of forming the diffraction grating 33. It is necessary to adjust an optical path length between optical resonators in order to perform mode-locking of an ultrashort pulsed laser beam. However, according to the optical element 20B of the second embodiment, it is possible to perform mode-locking of an ultrashort pulsed laser beam, and it is also possible to arbitrarily perform wavelength dispersion compensation for an arbitrary optical path length according to a position of forming the diffraction grating 33.

[Third Embodiment]

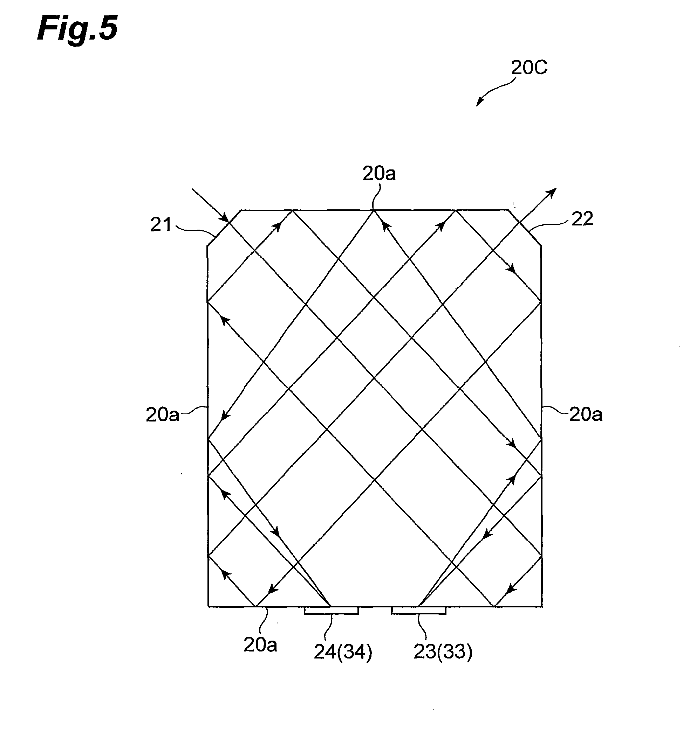

FIG. 5 is a block diagram of an optical element 20C according to the third embodiment of the present invention. The optical element 20C shown in FIG. 5 is different from the second embodiment in the configuration in which, in the optical element 20B, a diffraction grating is formed on, in place of the incident window 21, another part 24 of the wall surface 20a other than the incident window 21, the emitting window 22, and the part 23 of the wall surface 20a. The other configuration of the optical element 20C is the same as that of the optical element 20B.

In the same way, a diffraction grating plate on which the reflective diffraction grating 34 is formed by a direct process, is integrally attached on the other part 24 of the wall surface 20a. As the diffraction grating plate, a material thereof is preferably the same as the medium of the optical element 20A described above.

In addition, the diffraction grating 34 may be integrally formed with the other part 24 of the wall surface 20a by a direct process.

In the optical element 20C of the third embodiment as well, it is possible to obtain advantages which are the same as those of the optical element 20B of the second embodiment.

Moreover, in the optical element 20C of the third embodiment, it is possible to adjust the distance $l_g$ between the diffraction gratings 33 and 34, i.e., the optical path length between the diffraction gratings 33 and 34 according to a position of forming the diffraction grating 34 in addition to a position of forming the diffraction grating 33. Therefore, it is possible to more arbitrarily control wavelength dispersion.

Moreover, in the optical element 20C of the third embodiment, it is possible to adjust the propagation distance $l_m$ inside the optical element 20C as well according to a position of forming the diffraction grating 34 in addition to a position of forming the diffraction grating 33. Therefore, it is possible to more arbitrarily perform mode-locking of an ultrashort pulsed laser beam, and it is also possible to more arbitrarily perform wavelength dispersion compensation for an arbitrary optical path length.

[Fourth Embodiment]

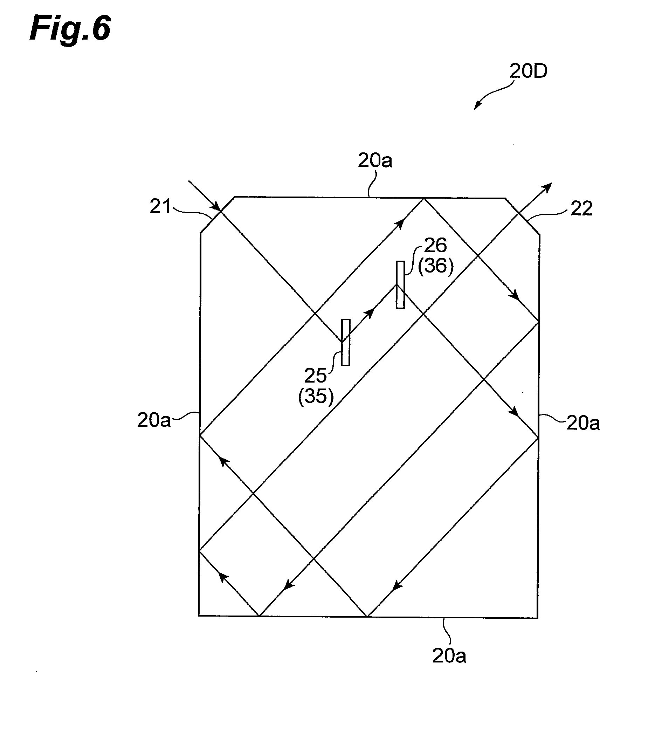

FIG. 6 is a block diagram of an optical element 20D according to the fourth embodiment of the present invention. The optical element 20D shown in FIG 6 is different from the first embodiment in the configuration in which, in the optical element 20A, diffraction gratings are formed on, in place of the incident window 21, parts 25 and 26 of the internal optical path. The other configuration of the optical element 20D is the same as that of the optical element 20A.

Transmissive diffraction gratings 35 and 36 are integrally formed with the parts 25 and 26 of the internal optical path of the optical element 20D by a direct process. In recent years, a technology of processing the inside of a light transmission characteristic medium by using a laser beam or the like has been studied. For example, with use of this technology, it is possible to form a diffraction grating to an arbitrary place inside the optical element 20D.

In the optical element 20D of the fourth embodiment as well, it is possible to obtain advantages which are the same as those of the optical element 20A of the first embodiment.

Moreover, according to the optical element 20D of the fourth embodiment, in the same way as in the optical element 20C of the third embodiment, it is possible to adjust the distance $l_g$ between the diffraction gratings 35 and 36, i.e., the optical path length between the diffraction gratings 35 and 36 according to positions of forming the diffraction gratings 35 and 36. Therefore, it is possible to more arbitrarily control wavelength dispersion.

Moreover, according to the optical element 20D of the fourth embodiment, in the same way as in the optical element 20C of the third embodiment, it is possible to adjust the propagation distance $1_m$ inside the optical element 20D as well according to positions of forming the diffraction gratings 35 and 36. Therefore, it is possible to more arbitrarily perform mode-locking of an ultrashort pulsed laser beam, and it is also possible to more arbitrarily perform wavelength dispersion compensation for an arbitrary optical path length.

[Fifth Embodiment]

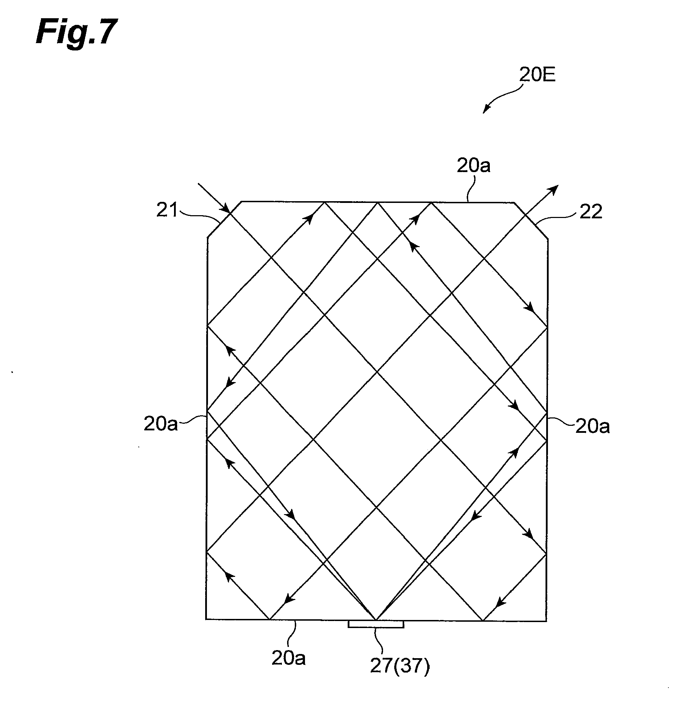

FIG. 7 is a block diagram of an optical element 20E according to the fifth embodiment of the present invention. The optical element 20E shown in FIG 7 is different from the first embodiment in the configuration in which, in the optical element 20A, only one diffraction grating is formed on, in place of the incident window 21 and the emitting window 22, a part 27 of the wall surface 20a other than the incident window 21 and the emitting window 22, the part 27 of the wall surface 20a through which a light passes twice.

In the same way as in the second and third embodiments, a diffraction grating plate on which a reflective diffraction grating 37 is formed by a direct process, is integrally attached on the part 27 of the wall surface 20a. As the diffraction grating plate, a material thereof is preferably the same as the medium of the optical element 20A described above.

In addition, the diffraction grating 37 may be integrally formed with the part 27 of the wall surface 20a by a direct process.

In the optical element 20E of the fifth embodiment as well, it is possible to obtain advantages which are the same as those of the optical element 20A of the first embodiment.

Moreover, according to the optical element 20E of the fifth embodiment, in the same way as the optical elements 20B to 20D of the second to fourth embodiments, it is possible to adjust the distance $l_g$ between the diffraction grating 37, i.e., the optical path length with the diffraction grating 37 according to a position of forming the diffraction grating 37. Therefore, it is possible to more arbitrarily control wavelength dispersion.

Further, according to the optical element 20E of the fifth embodiment, in the same way as the optical elements 20B to 20D of the second to fourth embodiments, it is possible to adjust the propagation distance $1_m$ inside the optical element 20E according to a position of forming the diffraction grating 37. Therefore, it is possible to more arbitrarily perform mode-locking of an ultrashort pulsed laser beam, and it is also possible to more arbitrarily perform wavelength dispersion compensation for an arbitrary optical path length.

Moreover, according to the optical element 20E of the fifth embodiment, it is possible to decrease the number of diffraction gratings. Therefore, it is easy to manufacture the optical element, which makes it possible to achieve price reduction.

[Sixth Embodiment]

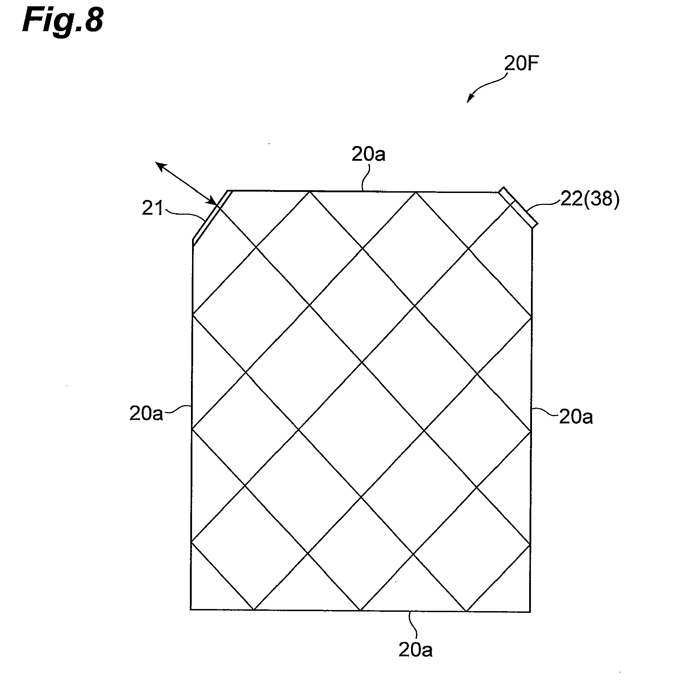

FIG 8 is a block diagram of an optical element 20F according to the sixth embodiment of the present invention. The optical element 20F shown in FIG 8 is different from the first embodiment in the configuration in which, in the optical element 20A, a total reflecting plate 38 in place of the diffraction grating 32 is provided on the emitting window 22. The other configuration of the optical element 20F is the same as that of the optical element 20A.

A diffraction grating plate on which the total reflecting plate 38 is formed by a direct process, is integrally attached on the window 22. In this way, in the present embodiment, the window 22 corresponds to the halfway point of a laser beam, and the window 21 corresponds to the incident and emitting windows.

In the optical element 20F of the sixth embodiment as well, it is possible to obtain advantages which are the same as those of the optical element 20A of the first embodiment.

Moreover, according to the optical element 20F of the sixth embodiment, because it is possible to double the optical path length even with use of a medium having the same area and volume as the optical element 20F, in a case of realizing an optical device such as the laser beam oscillation device 100 or the laser beam amplifying device 100A, it is possible to achieve further downsizing of the optical device.

Moreover, according to the optical element 20F of the sixth embodiment, it is possible to decrease the number of diffraction gratings. Therefore, it is easy to manufacture the optical element, which makes it possible to achieve price reduction.

[Seventh Embodiment]

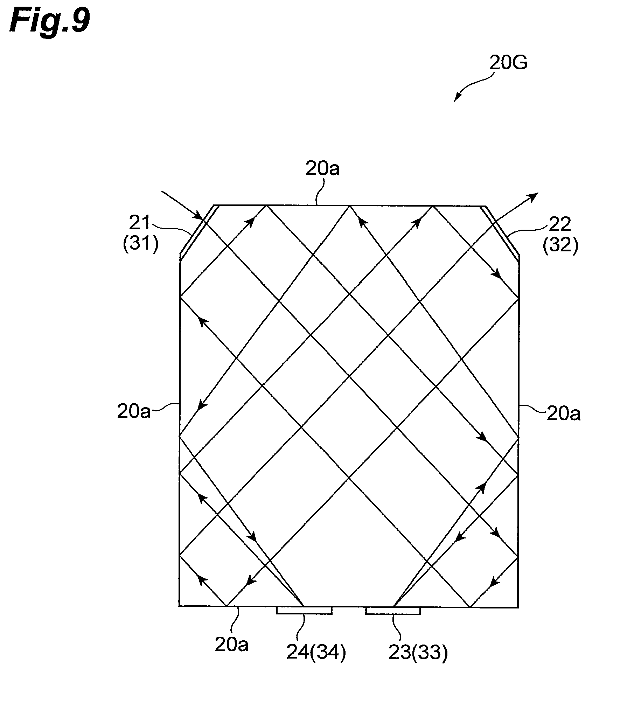

FIG. 9 is a block diagram of an optical element 20G according to the seventh embodiment of the present invention. The optical element 20G shown in FIG 9 is different from the first embodiment in the configuration in which, in the optical element 20A, the reflective diffraction gratings 33 and 34 are further provided on the parts 23 and 24 of the wall surface 20a in the same way as the optical element 20C of the third embodiment. The other configuration of the optical element 20G is the same as that of the optical element 20A.

In the optical element 20G of the seventh embodiment as well, it is possible to obtain advantages which are the same as those of the optical element 20A of the first embodiment and the optical element 20C of the third embodiment.

Moreover, in the optical element 20G of the seventh embodiment, a laser beam is diffracted four times, which makes it possible to cancel a spatially dispersed state of the laser beam. The laser beam is diffracted by the diffraction grating 31, and after the spatially-extended laser beam is made into a parallel light by the diffraction grating 33, the light is converged on one point by the diffraction grating 34, to be returned to an original beam size by the diffraction grating 32.

In the case where only two diffraction gratings are used, the parallel light after the diffraction grating 33 is spatially dispersed in principle. Meanwhile, it is possible to insert the optical element 20G neither in the case where an optical element is installed in an optical resonator by taking this configuration, that is, in the case where it is presupposed that a light is reciprocated to and from the optical element, nor in the case where a spatially dispersed state of a light is not problematic. It is preferable that the optical element 20G is disposed such that an incident light and an emitting light are aligned on the same straight line.

[Eighth Embodiment]

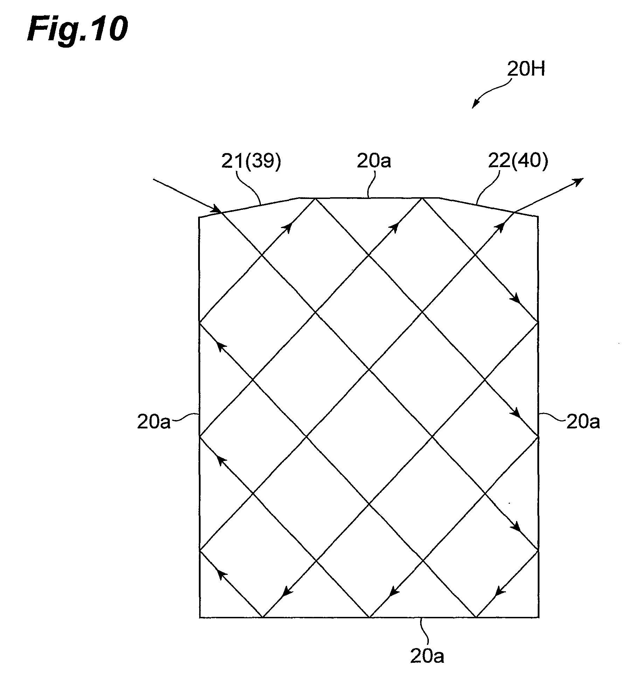

FIG 10 is a block diagram of an optical element 20H according to the eighth embodiment of the present invention. The optical element 20H shown in FIG 10 is different from the first embodiment in the configuration in which, in the optical element 20A, prisms 39 and 40 in place of the diffraction gratings 31 and 32 are respectively provided on the incident window 21 and the emitting window 22. The other configuration of the optical element 20H is the same as that of the optical element 20A.

In the optical element 20H, the incident window 21 is formed into a non-vertical plane with respect to an incident light, so as to have a prismatic function, and the emitting window 22 is formed into a non-vertical plane with respect to an emitting light, so as to have a prismatic function. In this way, in the optical element 20H, the prisms are integrally formed with the incident window 21 and the emitting window 22.

Moreover, it is preferable that these incident window 21 and emitting window 22 are formed so as to cause a laser beam to be incident or emit at a Brewster's angle. Due to these configurations, it is possible to enormously reduce loss in a prism interface.

In the optical element 20H of the eighth embodiment as well, it is possible to obtain advantages which are the same as those of the optical element 20A of the first embodiment.

Moreover, according to the optical element 20H of the eighth embodiment, it suffices to merely polish the incident window 21 and the emitting window 22 after chamfering process. Therefore, it is easy to manufacture the optical element, which makes it possible to achieve price reduction.

In addition, the present invention is not limited to the present embodiments described above, and various modifications are possible. For example, in the present embodiments, the shapes of the media as the optical elements 20A to 20H are substantially rectangular parallelepiped. However, the shapes of the media as the optical elements 20A to 20H are not limited to a rectangular parallelepiped.

Further, in the first to seventh embodiments, as positions of forming the diffraction gratings, one example such as the incident window, the emitting window, and parts of the wall surface, and parts of the inside of the media are shown. Meanwhile, various combinations are applicable as a combination of these positions of forming the diffraction gratings.

Further, in the fourth embodiment, the mode in which the two diffraction gratings are provided inside the medium of the optical element 20D. However, in the same way as in the fifth embodiment, the fourth embodiment may be in a mode in which one diffraction grating is provided on a portion through which a light passes twice.

**Industrial Applicability**

The present invention is available as an optical element, a laser beam oscillation device and a laser beam amplifying device which are capable of compensating for wavelength dispersion of a laser beam.

**Claims**

1. An optical element which is composed of a light transmission characteristic medium, that has a refractive index higher than a refractive index of air, the optical element causes an incident laser beam to be propagated inside while reflecting the laser beam by a wall surface a plurality of times, the optical element comprising:

    an incident window which is located in a part of the wall surface, that is for allowing the laser beam to be incident;

an emitting window which is located in a part of the wall surface, that is for allowing the laser beam propagated inside to be emit; and a wavelength dispersion compensating unit which is integrally located in a part of the medium, the wavelength dispersion compensating unit compensates for wavelength dispersion by causing the laser beam to be transmitted or reflected at least twice.

2. The optical element according to claim 1, wherein the wavelength dispersion compensating unit is formed on the part of the medium by a direct process.

3. The optical element according to claim 1, wherein the wavelength dispersion compensating unit is attached on the part of the medium.

4. The optical element according to any one of claims 1 to 3, wherein the wavelength dispersion compensating unit is located at at least one of the incident window and the emitting window, that is a transmissive wavelength dispersion compensating unit.

5. The optical element according to any one of claims 1 to 3, wherein the wavelength dispersion compensating unit is located on the wall surface other than the incident window and the emitting window, that is a reflective wavelength dispersion compensating unit.

6. The optical element according to claim 1 or 2, wherein the wavelength dispersion compensating unit is located inside the medium.

7. The optical element according to any one of claims 1 to 6, wherein the wavelength dispersion compensating unit is a diffraction grating.

8. The optical element according to any one of claims 1 to 6, wherein the wavelength dispersion compensating unit is a prism.

9. The optical element according to any one of claims 1 to 6, wherein the incident window and the emitting window are located in a same portion in the wall surface.

10. A laser beam oscillation device comprising:

an energy supplying unit which supplies an excitation light; an optical amplifying medium which receives the excitation light to generate a laser beam; and an optical element which causes the laser beam to be propagated inside while reflecting the laser beam by a wall surface a plurality of times, that is the optical element according to any one of claims 1 to 9.

11. A laser beam amplifying device comprising:

an energy supplying unit which supplies an excitation light; an optical amplifying medium which receives a seed light, and amplifies the seed light by using the excitation light, to generate a laser beam; and an optical element which causes the laser beam to be propagated inside while reflecting the laser beam by a wall surface a plurality of times, that is the optical element according to any one of claims 1 to 9.

# Fig.1

100

```
┌─────────────────────────────────────────┐
│ Optical amplifying unit          120     │
│                                          │
│              20            10            │
│  ┌───────────────┐  ┌───────────────┐    │
│  │               │  │   Optical     │    │      110
│  │Optical element│  │  amplifying   │◄───┼───┐ ┌──────────────┐
│  │               │  │   medium      │    │   └─│   Energy     │
│  └───────────────┘  └───────────────┘    │     │supplying unit│
│                                          │     └──────────────┘
└─────────────────────────────────────────┘
```

output ◄

## Fig.2

Seed light generating device — 200

Optical amplifying unit — 120

Optical element — 20

Optical amplifying medium — 10

Energy supplying unit — 110

100A

output

# Fig.3

# *Fig.4*

20B

20a

21
(31)

22

20a

20a

20a

23(33)

# Fig.5

20C

20a

21

22

20a

20a

20a    24(34)    23(33)

# Fig.6

# Fig.7

# Fig.8

*Fig.9*

# Fig.10

20H

21(39)    20a    22(40)

20a

20a

20a

| **INTERNATIONAL SEARCH REPORT** | | International application No. |
|---|---|---|
| | | PCT/JP2009/066041 |

**A. CLASSIFICATION OF SUBJECT MATTER**
H01S3/10(2006.01)i, G02B5/04(2006.01)i, G02B5/18(2006.01)i

According to International Patent Classification (IPC) or to both national classification and IPC

**B. FIELDS SEARCHED**

Minimum documentation searched (classification system followed by classification symbols)
H01S3/10, G02B5/04, G02B5/18

Documentation searched other than minimum documentation to the extent that such documents are included in the fields searched
Jitsuyo Shinan Koho          1922–1996   Jitsuyo Shinan Toroku Koho   1996–2009
Kokai Jitsuyo Shinan Koho    1971–2009   Toroku Jitsuyo Shinan Koho   1994–2009

Electronic data base consulted during the international search (name of data base and, where practicable, search terms used)
JSTPlus(JDreamII)

**C. DOCUMENTS CONSIDERED TO BE RELEVANT**

| Category* | Citation of document, with indication, where appropriate, of the relevant passages | Relevant to claim No. |
|---|---|---|
| X | JP 2005-191074 A  (Aisin Seiki Co., Ltd.), 14 July, 2005 (14.07.05), Par. Nos. [0045] to [0055]; Figs. 1 to 4 (Family: none) | 1–11 |
| A | JP 5-67829 A  (Fujitsu Ltd.), 19 March, 1993 (19.03.93), Full text; all drawings (Family: none) | 1–11 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 October, 2009 (01.10.09) | 13 October, 2009 (13.10.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI8264869 B

- JP 2000216463 A